# EUROPÄISCHE PATENTSCHRIFT

(11) **EP 1 496 339 B1**
(45) Veröffentlichungstag und Bekanntmachung des Hinweises auf die Patenterteilung: **10.09.2014**
(21) Anmeldenummer: 04015442.9
(22) Anmeldetag: 01.07.2004
(51) Int. Cl.: G01D 5/20

(54) **Induktiver Drehwinkelsensor**
Inductive sensor for measuring the angle of rotation
Capteur inductif pour mesurer l'angle de rotation

(30) Priorität: 09.07.2003 DE 10330898
(43) Veröffentlichungstag der Anmeldung: 12.01.2005
(73) Patentinhaber: Bayerische Motoren Werke Aktiengesellschaft, 80809 München (DE)
(72) Erfinder: Homeister, Joachim, 82024 Taufkirchen (DE); Connert, Rolf, 80939 München (DE); Kragl, Rudolf, 85406 Zolling (DE)

(56) Entgegenhaltungen:
- EP-A2- 0 182 085
- WO-A1-90/01140
- CA-A1- 2 445 689
- DE-A1- 4 213 866

## Beschreibung

Die Erfindung betrifft einen induktiven Drehwinkelsensor zur Ermittlung der Winkelposition eines um eine Drehachse drehbaren Bauteils, mit einem Positionsdetektor in Form einer Spulenanordnung aus mindestens zwei in Reihe geschalteten, weitgehend identischen Messspulen mit einem zwischen den Messspulen angeordneten mittleren Spannungsabgriff, wobei die Messspulen jeweils spiralförmig in einem Winkelsektor auf einer gehäusefest normal zu der Drehachse befestigten, unmagnetischen und nichtleitenden Trägerscheibe angeordnet sind, und mit einem Positionsgeber in Form von zwei mit einem induktiv wirksamen Werkstoff versehenen, als Winkelsektorscheiben ausgebildeten Sensorscheiben, die einander gegenüberliegend axial beidseitig und parallel zu der Trägerscheibe an einer mit dem drehbaren Bauteil verbundenen Trägerachse befestigt sind.

Induktive Drehwinkelsensoren sind seit langem in unterschiedlicher Ausbildung und Anordnung bekannt. Insbesondere in der automatisierten Steuerung der Bewegungsabläufe von Maschinen, bei denen die Drehwinkelposition von drehbeweglichen Bauteilen, wie beispielsweise der Einstellnocken einer variablen Ventilsteuerung eines Kfz-Kolbenmotors, von Bedeutung ist, kann die jeweils aktuelle Position der betreffenden Bauteile mittels induktiv und damit berührungslos und weitgehend verschleissfrei arbeitender Drehwinkelsensoren ermittelt werden. Dabei müssen die Drehwinkelsensoren, abhängig von dem speziellen Anwendungsfall, unter Umständen hohe Anforderungen im Hinblick auf Langlebigkeit und Robustheit gegenüber mechanischen Schwingungen, Stössen, Temperaturschwankungen, und Verschmutzung erfüllen.

Bekannte Drehwinkelsensoren arbeiten zumeist nach dem Wirbelstromprinzip. Dabei besteht der Drehwinkelsensor aus einer feststehenden Spulenanordnung aus mindestens zwei in Reihe geschalteten Messspulen mit einem mittleren Spannungsabgriff und einem in der Nähe der Spulenanordnung berührungsfrei angeordneten Positionsgeber, der aus einem hochleitenden Werkstoff, wie z.B. Kupfer oder Aluminium, besteht und mit dem drehbaren Bauteil starr verbunden ist. Durch die Versorgung der Spulenanordnung mit einer Wechselspannung (Sinusspannung oder Rechteckspannung) wird durch die Messspulen ein elektromagnetisches Wechselfeld aufgebaut, durch das positionsabhängig in dem Positionsgeber mehr oder weniger starke Wirbelströme induziert werden. Hierdurch wird den beiden Messspulen zumeist in unterschiedlicher Stärke Energie entzogen, was zu einer unterschiedlichen scheinbaren Änderung der Induktivitäten der Messspulen und damit zu einer positions- bzw. drehwinkelabhängigen Spannungsamplitude der Ausgangsspannung an dem mittleren Spannungsabgriff führt, die zur Ermittlung der Drehwinkelposition des Positionsgebers und damit des zugeordneten drehbeweglichen Bauteils ausgewertet werden kann.

Nachteilig ist an induktiven Drehwinkelsensoren, die nach dem Wirbelstromprinzip arbeiten, dass sie bei einer Auslegung für niedrige Anregungsfrequenzen im kHz-Bereich hohe nominelle Induktivitäten der Messspulen erfordern. Diese sind bei kompakter Bauweise durch Messspulen zu erreichen, die eine hohe Anzahl von Spulenwindungen aus einem Draht mit sehr kleinem Leitungsquerschnitt aufweisen, womit aber nachteilig neben einer aufwendigen Herstellung eine relativ geringe mechanische Robustheit verbunden ist. Um eine hinreichende mechanische Stabilität der Spulenanordnung zu erreichen, werden dann oftmals spezielle Wickelkörper verwendet und die Spulenanordnung mit speziellen Vergussmassen versehen, die z.B. bei der Anwendung in Kfz-Motorsteuerungen mit Einsatztemperaturen von bis zu 160 °C entsprechend temperaturstabil sein müssen. Hierdurch erhöhen sich die Herstellungskosten und der Vorteil einer kompakten Bauweise geht zumindest teilweise verloren. Alternativ dazu kann ein entsprechender induktiver Drehwinkelsensor auch mit einer Spulenanordnung aus Messspulen mit niedriger Induktivität aufgebaut sein. Hierbei können die Messspulen aus wenigen Windungen aus Draht mit grösserem Leitungsdurchmesser oder sogar als gedruckte Leiterspulen und der zugeordnete Positionsgeber als eine dünne leitfähige Scheibe aus Kupfer oder Aluminium ausgebildet sein. Hierdurch ergibt sich zwar ein relativ kompakter und robuster Drehwinkelsensor. Nachteilig dabei sind jedoch hohe erforderliche Anregungsfrequenzen im MHz-Bereich, die einen aufwendigen und teuren Oszillator zur Erzeugung der eingangsseitigen Wechselspannung und einen entsprechenden Demodulationsschaltkreis zur Positionsauswertung der Ausgangsspannung bedingen.

Als weitere Ausführungsform ist beispielsweise ein nach dem Wirbelstromprinzip arbeitender Drehwinkelsensor der Fa. Positek Ltd. bekannt, der eine Kombination beider vorgenannten Bauarten darstellt. Dieser Drehwinkelsensor weist einen Positionsdetektor in Form einer Spulenanordnung aus zwei in Reihe geschalteten weitgehend identischen Messspulen auf, die jeweils spiralförmig in einem Winkelsektor auf einer gehäusefest normal zu einer Drehachse befestigten, unmagnetischen und nichtleitenden Trägerscheibe angeordnet sind, und einen Positionsgeber in Form von zwei aus einem hochleitenden Werkstoff bestehenden, als Winkelsektorscheiben ausgebildeten Sensorscheiben auf, die einander gegenüberliegend axial beidseitig und parallel zu der Trägerscheibe an einer mit dem drehbaren Bauteil verbundenen Trägerachse befestigt sind. Dieser bekannte, relativ kompakte Drehwinkelsensor erfordert aber nachteilig eine höhere Anregungsfrequenz von mindestens 1 MHz und weist bei einer moderaten mittleren Linearität aufgrund starker Nichtlinearität im Bereich der Endpositionen des Positionsgebers nur einen nutzbaren Drehwinkelbereich von etwa 140° auf.

Aus der CA 2 445 689 und der DE 42 13 689 A1 sind jeweils induktionsbasierte Positionssensoren zum Erfassen linearer oder rotatorischer Bewegungen bekannt.

Aus der EP 0182 085 A2 ist ein Positionssensor bekannt, der auf dem Wirbelstromprinzip basieren und bei dem zum Erzeugen von Drehsignalen zwei sektorenförmige Scheiben auf einer gemeinsamen Trägerachse zueinander axial beabstandet vorgesehen sind.

Aus der WO 90/01140 A1 ist ein induktiver Drehwinkelsensor gemäß dem Oberbegriff des Anspruchs 1 bekannt.

Es ist Aufgabe der vorliegenden Erfindung, einen Drehwinkelsensor gemäß dem Oberbegriff des Anspruchs 1 vorzuschlagen, der bei kompakter und robuster Bauweise in Verbindung mit einer niedrigen Anregungsfrequenz eine hohe Linearität und einen großen nutzbaren Drehwinkelbereich aufweist.

Diese Aufgabe wird erfindungsgemäss in Verbindung mit dem Oberbegriff des Anspruches 1 dadurch gelöst,
- dass der Positionsgeber in Form von zwei mit einem induktiv wirksamen Werkstoff versehenen, als Winkelsektorscheiben ausgebildeten Sensorscheiben ausgebildet ist, die einander gegenüberliegend axial beidseitig und parallel zu dem Träger an einer mit dem drehbaren Bauteil verbundenen Trägerachse befestigt sind,
- dass der Träger als Trägerscheibe ausgebildet ist, und
- dass die Sensorscheiben aus einem weichmagnetischen Werkstoff bestehen und über ein weichmagnetisches Verbindungsstück der Trägerachse magnetisch miteinander gekoppelt sind.

Vorteilhafte Ausgestaltungen des erfindungsgemässen Drehwinkelsensors sind in den Unteransprüchen 2 bis 13 angegeben.

Durch die Ausbildung des Drehwinkelsensors nach dem Permeabilitätsprinzip ergibt sich bei ähnlichem geometrischen Aufbau zu dem bekannten Drehwinkelsensor der Fa. Positek Ltd. eine höhere Empfindlichkeit und eine bessere Linearität bei niedrigeren Anregungsfrequenzen im Bereich von 30 bis 50 kHz. Dabei wird die Empfindlichkeit der Spulenanordnung, d.h. die positionsabhängige Änderung der Induktivitäten der Messspulen, und damit der Ausgangsspannung durch die magnetische Koppelung der beiden Sensorscheiben über das weichmagnetische Verbindungsstück wesentlich erhöht. Insgesamt ergibt sich über den gesamten Drehwinkelbereich eine relativ gute Linearität zwischen der Drehwinkelposition der Sensorscheiben und der Ausgangsspannung an dem mittleren Spannungsabgriff. Demzufolge beträgt der nutzbare Drehwinkelbereich des erfindungsgemässen Drehwinkelsensors dann 180°, wenn die Messspulen jeweils in einem Winkelsektor von 180° auf der Trägerscheibe angeordnet sind, und die Sensorscheiben einen Flächenwinkel von 180° aufweisen.

Es ist aber auch möglich, den nutzbaren Drehwinkelbereich über 180° hinaus zu erhöhen, und zwar indem der Drehwinkelsensor derart ausgebildet wird, dass die Messspulen jeweils in einem gleich grossen Winkelsektor kleiner als 180° symmetrisch auf der Trägerscheibe angeordnet sind, und die Sensorscheiben einen dazu identischen Flächenwinkel aufweisen, wobei sich mittig zwischen den Messspulen ein Leerwinkelsektor ergibt. Die Messspulen können dabei derart auf der Trägerscheibe angeordnet sein, dass die zugeordneten Winkelsektoren endseitig unmittelbar aneinander angrenzen oder bei Winkelsektoren der Messspulen von kleiner als 120° einen Leerwinkelsektor einschliessen, der einen zu den Winkelsektoren der Messspulen identischen Flächenwinkel aufweist. Der Drehwinkelbereich des Positionsgebers erstreckt sich dabei jeweils von der Überdeckungsposition mit der ersten Messspule über den Leerwinkelsektor bis zu der Überdeckungsposition mit der zweiten Messspule. In einer ersten bevorzugten Ausführung eines derartigen Drehwinkelsensors sind die Messspulen jeweils in einem Winkelsektor von 120° auf der Trägerscheibe angeordnet, die Winkelsektoren der beiden Messspulen grenzen endseitig aneinander an, so dass sich ein Leerwinkelsektor von ebenfalls 120° ergibt, und die Sensorscheiben weisen auch einen Flächenwinkel von 120° auf. In diesem Fall beträgt der nutzbare Drehwinkelbereich sogar 240°. In einer zweiten bevorzugten Ausführung eines derartigen Drehwinkelsensors sind die Messspulen jeweils in einem Winkelsektor von 105° derart auf der Trägerscheibe angeordnet, dass sie mittig einen Leerwinkelsektor von ebenfalls 105° und endseitig einen Totwinkelsektor von 45° einschliessen, und die Sensorscheiben weisen einen Flächenwinkel von 105° auf. In diesem Fall beträgt der nutzbare Drehwinkelbereich zwar nur noch 210°, jedoch ist die Linearität der Ausgangsspannung insbesondere im Bereich der Endpositionen der Sensorscheiben aufgrund der durch den Totwinkelsektor bewirkten geringeren Beeinflussung zwischen der jeweils anderen Messspule und den Sensorscheiben deutlich verbessert.

Abhängig von der konkreten Ausführung des Drehwinkelsensors kann es bei den vorgenannten Ausführungen im Bereich des Leerwinkelsektors zu Nichtlinearitäten zwischen der Drehwinkelposition des Positionsgebers und der Ausgangsspannung kommen. Diese können aber auf relativ einfache Weise dadurch vermieden werden, dass zur Kompensation in beiden Hälften des Leerwinkelsektors jeweils zumindest eine mit der zugeordneten Messspule in Reihe geschaltete Zusatzspule auf der Trägerscheibe angeordnet wird.

Zur Verstärkung des durch die Spulenanordnung aufgebauten Magnetfeldes und damit zur Erhöhung der Empfindlichkeit des Drehwinkelsensors können beide Messspulen jeweils aus mehreren axial gestaffelten, voneinander isolierten, gleichsinnig gewickelten, und miteinander in Reihe geschalteten Teilspulen gebildet werden, wodurch bei einfachem und robustem Aufbau der einzelnen Teilspulen die Induktivitäten der Messspulen deutlich vergrössert werden. Hierzu können sowohl jeweils zwei Teilspulen einer Messspule axial beidseitig auf der Trägerscheibe als auch bei einem mehrschichtigen Aufbau der Trägerscheibe jeweils eine Teilspule der beiden Messspulen zwischen zwei benachbarten Schichten der Trägerscheibe angeordnet sein.

Als weichmagnetischer Werkstoff der Sensorscheiben und des Verbindungsstückes wird bevorzugt eine Ni-Fe-Legierung mit einem Nickelanteil von 45% bis 50% verwendet, die durch eine hohe Permeabilität, eine geringe Koerzitivfeldstärke, und eine niedrige Sättigungsinduktion eine hohe geometrische und zeitliche Empfindlichkeit bewirkt. Bei einem Einsatz des Drehwinkelsensors unter hohen Betriebstemperaturen ist allerdings eine Fe-Legierung mit ca. 3% Siliziumanteil mit einer Curietemperatur von ca. 750 °C als weichmagnetischer Werkstoff vorzuziehen, wobei dann allerdings der Nachteil einer geringeren Permeabilität und einer höheren Koerzitivfeldstärke in Kauf zu nehmen ist.

Zusammenfassend ist festzuhalten, dass der erfindungsgemässe Drehwinkelsensor im Vergleich zu bekannten induktiven Drehwinkelsensoren, die nach dem Wirbelstromprinzip arbeiten, bei kompakter und robuster Bauweise in Verbindung mit einer niedrigen Anregungsfrequenz eine verbesserte Linearität und einen grösseren nutzbaren Drehwinkelbereich aufweist.

Weitere Einzelheiten der Erfindung ergeben sich aus der nachstehenden, ausführlichen Beschreibung und den beigefügten Zeichnungen, in denen bevorzugte Ausführungen und vorteilhafte Ausgestaltungen der Erfindung beispielhaft veranschaulicht sind.

In den Zeichnungen zeigt:
- Figur 1:: Den schematischen Aufbau eines induktiven Drehwinkelsensors in einem radialen Längsschnitt,
- Figur 2:: den Aufbau des Drehwinkelsensors nach Fig. 1 in zwei axialen Draufsichten,
- Figur 3a:: den Aufbau einer zweiten Ausführung des Drehwinkelsensors in einer axialen Draufsicht, und
- Figur 3b:: den Aufbau einer modifizierten Ausführung des Drehwinkelsensors nach Fig. 3a in einer axialen Draufsicht,
- Figur 4:: den Aufbau einer dritten Ausführung des Drehwinkelsensors in einer axialen Draufsicht.

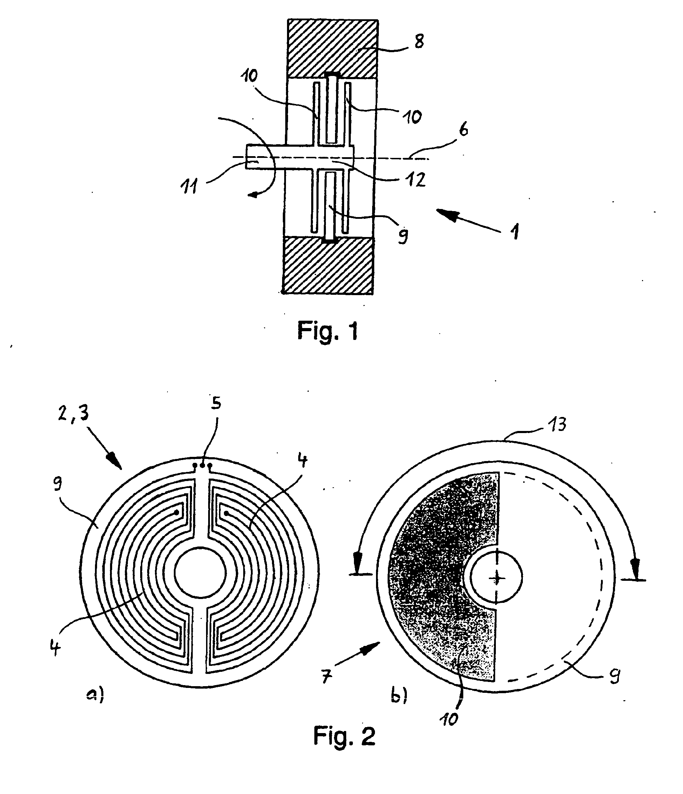

Ein erfindungsgemässer induktiver Drehwinkelsensor 1 nach Fig. 1 und Fig. 2, der zur Ermittlung der Drehwinkelposition eines drehbeweglichen Bauteils dient, umfasst einen Positionsdetektor 2 in Form einer Spulenanordnung 3 aus zwei in Reihe geschalteten, weitgehend identischen Messspulen 4 mit einem zwischen den Messspulen 4 angeordneten mittleren Spannungsabgriff 5 und einen in dem Magnetfeld der Spulenanordnung 3 um eine Drehachse 6 drehbeweglichen Positionsgeber 7. Die Messspulen 4 sind jeweils spiralförmig in einem Winkelsektor von vorliegend 180° auf einer starr an einem Gehäusebauteil 8 normal zu der Drehachse 6 befestigten, unmagnetischen und nichtleitenden Trägerscheibe 9 angeordnet und weisen mit entsprechend wenig Windungen eine relativ geringe Induktivität auf. Der Positionsgeber 7 besteht aus zwei aus einem weichmagnetischen Werkstoff bestehenden, als Winkelsektorscheiben von ebenfalls 180° ausgebildeten Sensorscheiben 10, die einander gegenüberliegend axial beidseitig und parallel zu der Trägerscheibe 9 an einer mit dem drehbaren Bauteil (nicht abgebildet) verbundenen Trägerachse 11 befestigt sind. Über ein weichmagnetisches Verbindungsstück 12 der Trägerachse 11 sind die beiden Sensorscheiben 10 magnetisch miteinander gekoppelt.

Der Drehwinkelsensor 1 funktioniert nach dem Permeabilitätsprinzip, d.h. abhängig von der Drehwinkelposition des Positionsgebers 7 relativ zu der Spulenanordnung 3 werden die Induktivitäten der Messspulen 4 unterschiedlich zueinander verändert, was bei einer Anregung der Spulenanordnung 3 mit einer Wechselspannung, deren Frequenz vorliegend im Bereich von 30 bis 50 kHz liegen kann, zu einer entsprechend veränderten Ausgangsspannung an dem mittleren Spannungsabgriff 5 führt, der zur Ermittlung der aktuellen Drehwinkelposition ausgewertet werden kann. Hierbei besteht bei dem vorliegenden Drehwinkelsensor 1 ein hochlinearer Zusammenhang zwischen der Ausgangsspannung und der Drehwinkelposition des Positionsgebers 7. Der nutzbare Drehwinkelbereich 13 beträgt, wie in Fig. 2b angedeutet ist, vorliegend 180° und ist damit deutlich grösser als bei bekannten Drehwinkelsensoren, die nach dem Wirbelstromprinzip arbeiten.

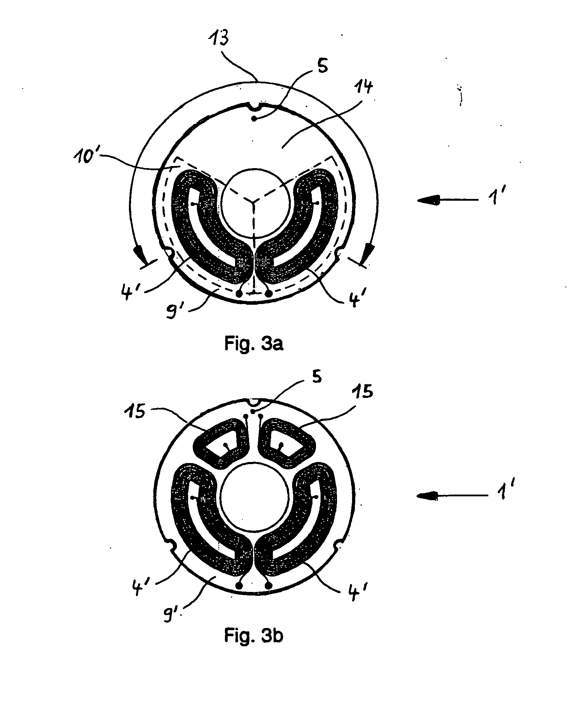

Bei einer weiteren Ausführung des erfindungsgemässen Drehwinkelsensors 1' nach Fig. 3a, in der nur die Trägerscheibe 9' mit der Spulenanordnung 3' abgebildet ist, sind die Messspulen 4' jeweils in einem Winkelsektor von 120° auf der Trägerscheibe 9' angeordnet, wobei die Winkelsektoren endseitig aneinander angrenzen, und die Sensorscheiben 10', die vorliegend zur Verdeutlichung des nutzbaren Drehwinkelbereichs 13 in den beiden Endpositionen gestrichelt angedeutet sind, weisen einen Flächenwinkel von ebenfalls 120° auf. Somit ergibt sich vorliegend mittig zwischen den Messspulen 4' ein Leerwinkelsektor 14 mit einem Flächenwinkel von ebenfalls 120°, in dem vorliegend auch der mittlere Spannungsabgriff 5 angeordnet ist. In dieser Ausführung des Drehwinkelsensors 1' ergibt sich bei hinreichender Linearität ein nutzbarer Drehwinkelbereich 13 von 240°.

Zur Verbesserung der Linearität eines derartigen Drehwinkelsensors 1' nach Fig. 3a ist in einer ansonsten identischen Ausführung nach Fig. 3b in beiden Hälften des Leerwinkelsektors 14 jeweils eine mit der zugeordneten Messspule 4 in Reihe geschaltete Zusatzspule 15 auf der Trägerscheibe 9' angeordnet. Der nutzbare Drehwinkelbereich 13 beträgt auch in diesem Fall 240°.

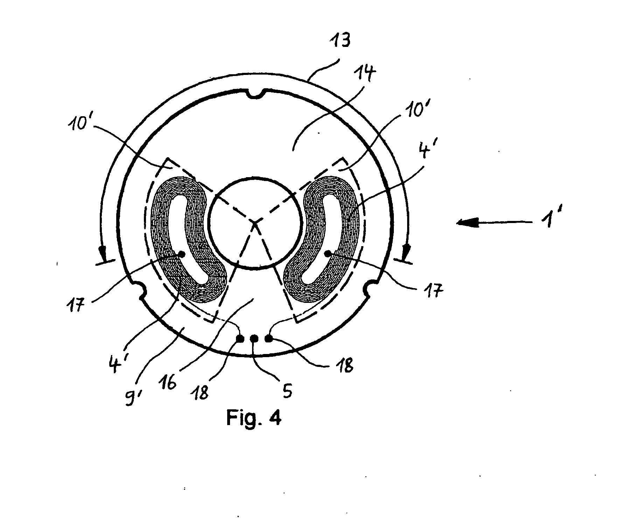

In einer weiteren Ausführung des erfindungsgemässen Drehwinkelsensors 1' nach Fig. 4 sind die Messspulen 4' jeweils in einem Winkelsektor kleiner als 120°, vorliegend von 105°, derart auf der Trägerscheibe 9' angeordnet, dass sich mittig zwischen den Messspulen 4' ein Leerwinkelsektor 14 von ebenfalls 105° und endseitig zwischen den Messspulen ein Totwinkelsektor 16 von 45° ergibt. Die in Fig. 4 jeweils in den beiden Endpositionen gestrichelt angedeuteten Sensorscheiben 10' weisen einen dazu identischen Flächenwinkel von 105° auf. Der mittlere Spannungsabgriff 5, der mit den inneren Anschlüssen 17 der beiden Messspulen 4' in Verbindung steht, ist vorliegend innerhalb der Trägerscheibe 9' zwischen die äusseren Anschlüsse 18 der Messspulen 4' gelegt. Der nutzbare Drehwinkelbereich 13 beträgt in Verbindung mit einer verbesserten Linearität nunmehr 210°.

Schliesslich ist noch anzumerken, dass der erfindungsgemässe Drehwinkelsensor in den verschiedensten Bereichen, vorzugsweise im Automobilbereich, angewendet werden kann. So kann der Sensor bspw. im Zusammenhang mit elektromagnetischen Ventilen und einem Drehaktuator zur Ventilsteuerung verwendet werden. Mit dem erfindungsgemässen Sensor kann die Lage des Drehaktuators bestimmt und für die Steuerung der elektromagnetischen Ventile verwendet werden.

Ebenso kann der erfindungsgemässe Drehwinkelsensor bei einer variablen Ventilsteuerung eines Kfz-Kolbenmotors verwendet werden, indem mit dem Sensor die Winkellage der Einstellnocken überwacht bzw. gemessen wird und gemäss der Winkellage die Ventile gesteuert werden. Der Sensor bietet eine Alternative zu den bereits verwendeten Sensoren, da er ein hohes Kosteneinsparungspotential bringen würde.

Des weiteren kann der erfindungsgemässe Drehwinkelsensor zur Bestimmung eines Drosselklappentellerwinkels verwendet werden, wobei der Positionsgeber fest mit einer Drosselkappenwelle verbunden ist, und je nach Stellung des Drosselklappentellers sich unterschiedlich zum Positionsdetektor, der parallel dazu angeordnet ist, verhält.

## Patentansprüche

1. Induktiver Drehwinkelsensor zur Ermittlung der Winkelposition eines um eine Drehachse (6) drehbaren Bauteils, mit einem Positionsdetektor (2) in Form einer Spulenanordnung (3) aus mindestens zwei in Reihe geschalteten, weitgehend identischen Messspulen (4, 4') mit einem zwischen den Messspulen (4, 4') angeordneten mittleren Spannungsabgriff (5), wobei die Messspulen (4, 4') jeweils spiralförmig in einem Winkelsektor (13) auf einem gehäusefest normal zu der Drehachse (6) befestigten, unmagnetischen und nichtleitenden Träger (9, 9') angeordnet sind und die Messspulen (4, 4') relativ geringe Induktivitäten aufweisen, wobei die Sensoranordnung derart nach dem Permeabilitätsprinzip wirksam ausgebildet ist, dass abhängig von der Drehwinkelposition des Positionsgebers (7) relativ zu der Spulenanordnung (3) die Induktivitäten der Messspulen (4, 4') unterschiedlich zueinander verändert werden, **dadurch gekennzeichnet,**
- **dass** der Positionsgeber (7) in Form von zwei mit einem induktiv wirksamen Werkstoff versehenen, als Winkelsektorscheiben ausgebildeten Sensorscheiben (10, 10') ausgebildet ist, die einander gegenüberliegend axial beidseitig und parallel zu dem Träger (9, 9') an einer mit dem drehbaren Bauteil verbundenen Trägerachse (11) befestigt sind,
- **dass** der Träger (9, 9') als Trägerscheibe ausgebildet ist, und
- **dass** die Sensorscheiben (10, 10') aus einem weichmagnetischen Werkstoff bestehen und über ein weichmagnetisches Verbindungsstück (12) der Trägerachse (11) magnetisch miteinander gekoppelt sind.

2. Drehwinkelsensor nach Anspruch 1, **dadurch gekennzeichnet, dass** die Messspulen (4, 4') jeweils in einem Winkelsektor von 180° auf der Trägerscheibe (9) angeordnet sind und die Sensorscheiben (10) einen Flächenwinkel von 180° aufweisen.

3. Drehwinkelsensor nach Anspruch 1, **dadurch gekennzeichnet, dass** die Messspulen (4', 4') jeweils in einem gleich grossen Winkelsektor (13) kleiner als 180° symmetrisch auf der Trägerscheibe (9', 9') angeordnet sind und die Sensorscheiben (10', 10') einen dazu identischen Flächenwinkel aufweisen, wobei sich mittig zwischen den Messspulen (4', 4') ein Leerwinkelsektor (14) befindet.

4. Drehwinkelsensor nach Anspruch 3, **dadurch gekennzeichnet, dass** die Messspulen (4') derart auf der Trägerscheibe (9') angeordnet sind, dass die zugeordneten Winkelsektoren (13) endseitig unmittelbar aneinander angrenzen.

5. Drehwinkelsensor nach Anspruch 3, **dadurch gekennzeichnet, dass** die Messspulen (4') bei einem Winkelsektor (13) kleiner als 120° derart auf der Trägerscheibe (9') angeordnet sind, dass der Leerwinkelsektor (14) einen zu den Winkelsektoren der Messspulen (4') identischen Flächenwinkel aufweist.

6. Drehwinkelsensor nach Anspruch 4, **dadurch gekennzeichnet, dass** die Messspulen (4') jeweils in einem Winkelsektor von 120° auf der Trägerscheibe (9') angeordnet sind, und die Sensorscheiben (10') einen Flächenwinkel von 120° aufweisen.

7. Drehwinkelsensor nach Anspruch 5, **dadurch gekennzeichnet, dass** die Messspulen (4') jeweils in einem Winkelsektor (13) von 105° auf der Trägerscheibe (9') angeordnet sind, und die Sensorscheiben (10') einen Flächenwinkel von 105° aufweisen.

8. Drehwinkelsensor nach einem der Ansprüche 3 bis 7, **dadurch gekennzeichnet, dass** zur Kompensation von Nichtlinearitäten der Spulenanordnung (3') in beiden Hälften des Leerwinkelsektors (14) jeweils zumindest eine mit der zugeordneten Messspule (4') in Reihe geschaltete Zusatzspule (15) auf der Trägerscheibe (9') angeordnet ist.

9. Drehwinkelsensor nach einem der Ansprüche 1 bis 8, **dadurch gekennzeichnet, dass** beide Messspulen (4, 4') jeweils aus mehreren axial gestaffelten, gleichsinnig gewickelten, und miteinander in Reihe geschalteten Teilspulen gebildet sind.

10. Drehwinkelsensor nach Anspruch 9, **dadurch gekennzeichnet, dass** jeweils zwei Teilspulen einer Messspule (4, 4') axial beidseitig auf der Trägerscheibe (9, 9') angeordnet sind.

11. Drehwinkelsensor nach Anspruch 9 oder 10, **dadurch gekennzeichnet, dass** die Trägerscheibe (9, 9') mehrschichtig aufgebaut ist, und jeweils eine Teilspule der beiden Messspulen (4, 4') zwischen zwei benachbarten Schichten der Trägerscheibe (9, 9') angeordnet ist.

12. Drehwinkelsensor nach einem der Ansprüche 1 bis 11, **dadurch gekennzeichnet, dass** eine Ni-Fe-Legierung mit einem Nickelanteil von 45% bis 50% als weichmagnetischer Werkstoff der Sensorscheiben (10) und des Verbindungsstückes (12) Verwendung findet.

13. Drehwinkelsensor nach einem der Ansprüche 1 bis 11, **dadurch gekennzeichnet, dass** eine Fe-Legierung mit ca. 3% Siliziumanteil als weichmagnetischer Werkstoff der Sensorscheiben (10) und des Verbindungsstückes (12) Verwendung findet.

## Claims

1. An inductive rotary angle sensor for determining the angular position of a component that can be rotated about a rotational axis (6), with a position detector (2) in the form of a coil arrangement (3) of at least two substantially identical measuring coils (4, 4') connected in series, with a central voltage tap (5) arranged between the measuring coils (4, 4'), wherein the measuring coils (4, 4') are in each case spirally arranged in an angle sector (13) on a non-magnetic and non-conductive carrier (9, 9'), which is fastened in a manner secured to the housing normal to the rotational axis (6), and the measuring coils (4, 4') have relatively low inductivities, the sensor arrangements being effectively configured in accordance with the permeability principle, in that the inductivities of the measuring coils (4, 4') are varied differently from one another depending on the rotation angular position of the position generator (7) relative to the coil arrangement (3), **characterised in that**,
- the position generator (7) is in the form of two sensor discs (10, 10') configured as angle sector discs and provided with an inductively effective material, said sensor discs being fastened on a carrier axle (11) connected to the rotatable component axially on both sides opposite one another and parallel to the carrier (9, 9'),
- **in that** the carrier (9, 9') is configured as a carrier disc, and
- **in that** the sensor discs (10, 10') comprise a soft magnetic material and are magnetically coupled to one another by means of a soft magnetic connecting piece (12) of the carrier axle (11).

2. A rotary angle sensor according to claim 1, **characterised in that** the measuring coils (4, 4') are in each case arranged in an angle sector of 180° on the carrier disc (9) and the sensor discs (10) have a plane angle of 180°.

3. A rotary angle sensor according to claim 1, **characterised in that** the measuring coils (4, 4') are in each case symmetrically arranged in an angle sector (13) of equal size of less than 180° on the carrier disc (9', 9') and the sensor discs (10', 10') have a plane angle identical thereto, wherein an empty angle sector (14) is located centrally between the measuring coils (4', 4').

4. A rotary angle sensor according to claim 3, **characterised in that** the measuring coils (4') are arranged on the carrier disc (9') in such a way that the associated angle sectors (13) directly adjoin one another at the end.

5. A rotary angle sensor according to claim 3, **characterised in that** the measuring coils (4') in an angle sector (13) smaller than 120° are arranged on the carrier disc (9') in such a way that the empty angle sector (14) has a plane angle identical to the angle sectors of the measuring coils (4').

6. A rotary angle sensor according to claim 4, **characterised in that** the measuring coils (4') are in each case arranged in an angle sector of 120° on the carrier disc (9'), and the sensor discs (10') have a plane angle of 120°.

7. A rotary angle sensor according to claim 5, **characterised in that** the measuring coils (4') are in each case arranged in an angle sector (13) of 105° on the carrier disc (9'), and the sensor discs (10') have a plane angle of 105°.

8. A rotary angle sensor according to any one of claims 3 to 7, **characterised in that** at least one additional coil (15) connected in series to the associated measuring coil (4') is in each case arranged on the carrier disc (9') to compensate nonlinearities of the coil arrangement (3') in the two halves of the empty angle sector (14).

9. A rotary angle sensor according to any one of claims 1 to 8, **characterised in that** the two measuring coils (4, 4') are in each case formed from a plurality of axially staggered part coils wound in the same direction and connected to one another in series.

10. A rotary angle sensor according to claim 9, **characterised in that** two part coils of a measuring coil (4, 4') are in each case axially arranged on both sides on the carrier disc (9, 9').

11. A rotary angle sensor according to claim 9 or 10, **characterised in that** the carrier disc (9, 9') has a multi-layer construction, and a part coil of the two measuring coils (4, 4') is in each case arranged between two adjacent layers of the carrier disc (9, 9').

12. A rotary angle sensor according to any one of claims 1 to 11, **characterised in that** an Ni-Fe-alloy with a nickel proportion of 45% to 50% is used as the soft magnetic material of the sensor discs (10) and the connecting piece (12).

13. A rotary angle sensor according to any one of claims 1 to 11, **characterised in that** an Fe alloy with a silicon proportion of approximately 3% is used as the soft magnetic material of the sensor discs (10) and the connecting piece (12).

## Revendications

1. Capteur inductif de mesure d'angle de rotation permettant de déterminer la position angulaire d'un élément mobile en rotation autour d'un axe de rotation (6), comprenant un détecteur de position (2) réalisé sous la forme d'une dispositif de bobines (3) constitué par au moins deux bobines de mesure (4, 4') largement identiques branchées en série, et une prise de tension moyenne (5) montée entre les bobines de mesure (4, 4'), ces bobines de mesure (4, 4') étant respectivement positionnées en forme de spirale dans un secteur angulaire (13) sur un support (9, 9') non magnétique et non conducteur, fixé solidairement au boitier perpendiculairement à l'axe de rotation (6), et les bobines de mesure (4, 4') ayant des inductances relativement faibles, le dispositif de capteur étant réalisé actif selon le principe de la perméabilité de sorte qu'en fonction de la position angulaire du transmetteur de position (7) par rapport au dispositif de bobines (3) les inductances des bobines de mesure (4, 4') soient modifiées différemment l'une de l'autre,
**caractérisé en ce que** :
- le transmetteur de position (7) est réalisé sous la forme de deux disques de détection (10, 10') réalisés sous la forme de disques à secteur angulaire renfermant une matière inductivement active, qui sont fixés à un axe support (11) relié à l'élément mobile en rotation en étant opposés axialement l'un à l'autre de part et d'autre et parallèlement au support (9, 9'),
- le support (9, 9') est réalisé sous la forme d'un disque support, et
- les disques de détection (10, 10') sont réalisés en un matériau magnétique doux et sont magnétiquement accouplés l'un à l'autre par l'intermédiaire d'une pièce de liaison (12) à magnétisation douce de l'axe support (11).

2. Capteur d'angle de rotation conforme à la revendication 1,
**caractérisé en ce que**
les bobines de mesure (4, 4') sont respectivement situées dans un section angulaire de 180° sur le disque support (9) et les disques de détection (10) présentent un angle plat de 180°.

3. Capteur d'angle de rotation conforme à la revendication 1,
**caractérisé en ce que**
les bobines de mesure (4, 4') sont respectivement disposées symétriquement sur le disque support (9, 9') dans un secteur angulaire (13) de même dimension inférieur à 180°, et les disques de détection (10, 10') présentent un angle plat identique, un secteur angulaire vide (14) étant situé dans une position médiane entre les bobines de mesure (4, 4').

4. Capteur d'angle de rotation conforme à la revendication 3,
**caractérisé en ce que**
les bobines de mesure (4') sont positionnées sur le disque support (9') de sorte que les secteurs angulaires (13) associés soient directement voisins l'un de l'autre à leur extrémité.

5. Capteur d'angle de rotation conforme à la revendication 3,
**caractérisé en ce que**
pour un secteur angulaire (13) inférieur à 120°, les bobines de mesure (4') sont positionnées sur le disque support (9') de sorte que le secteur angulaire vide (14) ait un angle plat identique aux secteurs angulaires des bobines de mesure (4').

6. Capteur d'angle de rotation conforme à la revendication 4,
**caractérisé en ce que**
les bobines de mesure (4') sont respectivement positionnées dans un secteur angulaire de 120° sur le disque support (9') et les disques de détection (10') ont un angle plat de 120°.

7. Capteur d'angle de rotation conforme à la revendication 5,
**caractérisé en ce que**
les bobines de mesure (4') sont respectivement positionnées dans un secteur angulaire (13) de 105° sur le disque support (9') et les disques de détection (10') ont un angle plat de 105°.

8. Capteur d'angle de rotation conforme à l'une des revendications 3 à 7,
**caractérisé en ce que**
pour permettre de compenser des non-linéarités du dispositif de bobines (3') dans les deux moitiés du secteur angulaire vide (14), au moins une bobine supplémentaire (15) montée en série sur la bobine de mesure (4') associée est montée sur le disque support (9').

9. Capteur d'angle de rotation conforme à l'une des revendications 1 à 8,
**caractérisé en ce que**
les deux bobines de mesure (4, 4') sont respectivement formées de plusieurs bobines partielles empilées, enroulées dans le même sens et montées en série d'une par rapport à l'autre.

10. Capteur d'angle de rotation conforme à la revendication 9,
**caractérisé en ce que**
deux bobines partielles d'une bobine de mesure (4, 4') sont respectivement disposées axialement de chaque côté du disque support (9, 9').

11. Capteur d'angle de rotation conforme à la revendication 9 ou 10,
**caractérisé en ce que**
le disque support (9, 9') est réalisé en plusieurs couches, et, une bobine partielle des deux bobines de mesure (4, 4') est respectivement positionnée entre deux couches voisines du disque support (9, 9').

12. Capteur d'angle de rotation conforme à l'une des revendications 1 à 11,
**caractérisé en ce que**
l'on utilise entant que matériau magnétique doux des disques de détection (10) et de la pièce de liaison (12), un alliage Ni-Fe ayant une teneur en nickel de 45 à 50 %.

13. Capteur d'angle de rotation conforme à l'une des revendications 1 à 11,
**caractérisé en ce que**
l'on utilise entant que matériau magnétique doux des disques de détection (10) et de la pièce de liaison (12), un alliage de fer renfermant environ 3 % de silicium.
